# FASCICULE DE BREVET EUROPEEN

(11) **EP 3 403 889 B1**
(45) Date de publication et mention de la délivrance du brevet: **09.06.2021**
(21) Numéro de dépôt: 18171486.6
(22) Date de dépôt: 09.05.2018
(51) Int. Cl.: B60S 1/40

(54) **ADAPTATEUR DESTINÉ À RELIER UN BALAI D'ESSUYAGE À UN BRAS D'ENTRAINEMENT D'UN SYSTÈME D'ESSUYAGE**
ZWISCHENSTÜCK ZUM VERBINDEN EINES SCHEIBENWISCHERS MIT EINEM ANTRIEBSARM EINES SCHEIBENWISCHSYSTEMS
ADAPTER FOR CONNECTING A WIPER BLADE TO A DRIVING ARM OF A WIPING SYSTEM

(30) Priorité: 19.05.2017 FR 1754458
(43) Date de publication de la demande: 21.11.2018
(73) Titulaire: Valeo Systèmes d'Essuyage, 78322 Le Mesnil Saint Denis (FR)
(72) Inventeur: MOULEYRE, Guillaume, 63500 ISSOIRE (FR); Houssat, Stéphane, 63500 ISSOIRE (FR); GAUCHER, Vincent, 63500 ISSOIRE (FR)
(74) Mandataire: Valeo Visibility

(56) Documents cités:
- EP-A1- 3 168 093
- EP-A1- 3 395 630
- DE-A1- 10 257 988
- DE-A1- 10 347 637
- DE-A1-102011 053 090

## Description

La présente invention se rapporte aux systèmes d'essuyage pour véhicule automobile, et concerne plus particulièrement un adaptateur constitutif d'un dispositif de connexion d'un tel système d'essuyage.

Les véhicules automobiles sont couramment équipés de système d'essuie-glaces pour assurer un balayage des surfaces vitrées, notamment des pare-brise avant ou lunettes arrière du véhicule, et pour éviter que la vision qu'a le conducteur de son environnement ne soit perturbée. Ces essuie-glaces comportent classiquement des balais allongés, porteurs de lames racleuses réalisées en une matière élastique, entraînés en mouvement par un bras d'entrainement auquel ils sont rattachés par un dispositif de connexion approprié. Le bras d'entrainement est lui-même relié à un dispositif d'entraînement qui le déplace selon un mouvement de va-et-vient angulaire. Les lames racleuses frottent contre la surface vitrée et en évacuent l'eau et les salissures en les amenant en dehors du champ de vision du conducteur.

Le dispositif de connexion comprend classiquement un connecteur et un adaptateur qui relient le balai d'essuyage au bras d'entraînement en autorisant un degré de liberté en rotation entre ces composants. Le dispositif de connexion assure également une amovibilité entre le balai d'essuyage et le bras d'entraînement, de manière à pouvoir remplacer le balai d'essuyage lorsque celui-ci est usagé.

Lors du remplacement du balai d'essuyage, l'utilisateur doit effectuer une rotation du balai d'essuyage par rapport au bras d'entrainement. Il existe alors un risque « d'over-rotation », c'est-à-dire un risque de rotation trop importante de ce balai d'essuyage par rapport au bras d'entrainement. L'adaptateur permettant la connexion entre ce balai d'essuyage et ce bras d'entrainement peut être endommagé par une telle « over-rotation ».

Plus précisément, cet adaptateur comprend classiquement une languette flexible de laquelle émerge un bouton configuré pour bloquer l'adaptateur dans le bras d'entrainement. En cas «d'over-rotation », cette languette flexible peut se casser, l'adaptateur ne pouvant alors plus remplir sa fonction de connexion avec le bras d'entrainement. DE-A-102011053090 montre le préambule de la revendication 1.

L'invention a pour objectif de limiter le risque de casse lors du changement de ces balais d'essuyage en proposant un adaptateur pour un dispositif de connexion comprenant un dispositif permettant d'éviter le risque d'over-rotation.

La présente invention concerne ainsi un adaptateur destiné à relier un balai d'essuyage à un bras d'entraînement d'un système d'essuyage pour véhicule automobile, l'adaptateur s'étendant principalement selon un axe longitudinal et comprenant au moins :
- un corps comprenant deux flancs reliés entre eux, au moins en partie, par un pont de matière,
- une tête formant une première extrémité longitudinale de l'adaptateur,
- une partie arrière formant une deuxième extrémité longitudinale de l'adaptateur opposée à la première extrémité longitudinale par rapport au corps,
- une languette flexible issue du corps de l'adaptateur et un bouton émergeant de la languette flexible, ce bouton étant configuré pour bloquer l'adaptateur dans une partie terminale du bras d'entrainement du système d'essuyage.

Selon la présente invention, le bouton présente au moins un organe de retenue configuré pour limiter un mouvement de l'adaptateur le long d'une direction perpendiculaire à un plan dans lequel s'inscrit le pont de matière, et l'adaptateur comprend un dispositif de limitation d'une rotation de la languette flexible par rapport à la partie arrière de l'adaptateur.

Le bouton de la languette flexible bloque les mouvements de translation selon l'axe longitudinal, et l'organe de retenue permet de bloquer les mouvements de l'adaptateur selon la direction perpendiculaire au pont de matière.

Cet organe de retenue délimite, avec le bouton dont il est issu et avec la languette flexible, une zone de réception configurée pour recevoir un bord de la partie terminale du bras d'entrainement.

L'organe de retenue s'étend selon une direction parallèle à l'axe longitudinal, depuis le bouton et vers le corps de l'adaptateur.

Selon la présente invention, le dispositif de limitation de la rotation de la languette flexible par rapport à la partie arrière de l'adaptateur comprend au moins une patte qui prend appui sur la partie arrière de l'adaptateur.

La languette flexible s'étend principalement dans un plan d'extension dans lequel s'inscrit l'axe longitudinal. La patte s'étend principalement selon un axe vertical, cet axe vertical étant perpendiculaire au plan d'extension de la languette flexible. Le bouton de la languette flexible s'étend quant à lui également selon l'axe vertical de la patte, ce bouton s'étendant donc perpendiculairement à la languette flexible dont il est issu.

Selon une caractéristique de la présente invention, la patte est issue de matière au moins avec le bouton.

Plus précisément, la patte s'étend dans le prolongement du bouton, donc perpendiculairement à la languette flexible, cette patte et ce bouton s'étendant dans des sens opposés le long de l'axe vertical. La patte peut également être partiellement issue de matière avec la languette flexible.

Selon l'invention, la patte présente une forme de L, cette patte comprenant une petite branche et une grande branche.

Le grand coté de cette patte peut par exemple être issu du bouton de la languette flexible et la petite branche s'appuyer sur la partie arrière de l'adaptateur.

Selon l'invention, la partie arrière comprend au moins un pan latéral issu d'un flanc du corps de l'adaptateur.

Selon l'invention, le dispositif de limitation de la rotation comprend une seule patte qui émerge du bouton de l'adaptateur par sa grande branche et dont la petite branche prend appui sur un bord inférieur du pan latéral de la partie arrière.

On comprend que le bord inférieur se situe à l'opposé d'une face supérieure de l'adaptateur, dans laquelle s'étend la languette flexible, par rapport à l'axe longitudinal.

Selon la présente invention, la partie arrière de l'adaptateur peut comprendre deux pans latéraux respectivement issus de chacun des flancs du corps de l'adaptateur et une paroi de fond reliant ces deux pans latéraux.

Cette partie arrière peut alors entourer, au moins partiellement, le bouton et le dispositif de limitation de la rotation.

Selon une variante du premier mode de réalisation, la patte émerge du bouton de la languette flexible par sa grande branche et la petite branche de cette patte prend appui sur un bord inférieur de la paroi de fond de la partie arrière.

Selon un deuxième mode de réalisation de la présente invention, le dispositif de limitation de la rotation de la languette flexible par rapport à la partie arrière de l'adaptateur comprend deux pattes. Selon ce deuxième mode de réalisation, chacune des pattes émerge du bouton par sa grande branche et prend appui sur la partie arrière grâce à sa petite branche.

Selon différentes variantes de ce deuxième mode de réalisation, chaque patte peut prendre appui soit sur le bord inférieur de la paroi de fond de la partie arrière, soit sur le bord inférieur de l'un des pans latéraux de cette partie arrière.

Selon une caractéristique de la présente invention, la tête de l'adaptateur présente au moins une oreille issue d'un épaulement joignant la tête et le corps, cette oreille étant configurée pour être reçue dans une ouïe ménagée dans la partie terminale du bras d'entrainement.

Selon une caractéristique de la présente invention, au moins une face externe de l'un des flancs du corps comprend au moins un maneton configuré pour être reçu dans une ouïe ménagée dans la partie terminale du bras d'entrainement.

Selon l'invention, l'ouïe du bras d'entrainement peut présenter une forme de « U » apte à recevoir à la fois l'oreille de la tête de l'adaptateur et le maneton du corps de cet adaptateur. Selon la présente invention, le maneton et l'oreille de l'adaptateur sont alignés le long de l'axe longitudinal de l'adaptateur.

L'invention concerne également un balai d'essuyage comprenant au moins un adaptateur selon la présente invention.

L'invention concerne encore un système d'essuyage comprenant un balai d'essuyage selon la présente invention et un bras d'entrainement dont une partie terminale présente deux parois latérales et une paroi supérieure, une ouïe étant ménagée dans chacune des parois latérales, chacune des ouïes étant configurée pour coopérer avec une oreille et/ou un maneton de l'adaptateur et la paroi supérieure de la partie terminale étant pourvue d'un orifice destiné à recevoir le bouton de l'adaptateur, un bord de cet orifice étant interposé entre l'organe de retenue et la languette flexible.

Au moins l'un des bords de l'orifice ménagé dans la paroi supérieure de la partie terminale du bras d'entrainement est ainsi reçu dans la zone de réception délimitée par l'organe de retenue, par le bouton dont il est issu et par la languette flexible de laquelle émerge ce bouton.

On comprend donc que l'organe de retenue prend appui sur le bord de l'orifice ménagé dans la paroi supérieure et dans lequel est inséré le bouton de la languette flexible, assurant ainsi un blocage de l'adaptateur selon la direction verticale.

Selon la présente invention, la partie terminale du bras d'entrainement peut présenter un espace dégagé en forme de « U » configuré pour recevoir l'adaptateur, les flancs de cette forme de « U » correspondant aux parois latérales de la partie terminale et la base de cette forme de « U » correspondant à la paroi supérieure de cette partie terminale.

Ainsi, on comprend que les parois latérales de la partie terminale du bras d'entrainement recouvrent les flancs du corps de l'adaptateur et que la paroi supérieure de cette partie terminale recouvre au moins le pont de matière de ce corps ainsi que la languette flexible de l'adaptateur.

Selon la présente invention, chacune des parois latérales de la partie terminale du bras d'entrainement présente une arête terminale qui s'inscrit dans un plan parallèle à la paroi supérieure de cette partie terminale.

D'autres détails, caractéristiques et avantages ressortiront plus clairement à la lecture de la description détaillée donnée ci-après à titre indicatif, en relation avec les différents modes de réalisation illustrés sur les figures suivantes :
- la figure 1 est une représentation schématique d'un système d'essuyage selon la présente invention ;
- la figure 2 est une vue en perspective d'un dispositif de connexion du système d'essuyage selon la présente invention ;
- la figure 3 est une vue en perspective d'un adaptateur du dispositif de connexion illustré sur la figure 2 ;
- la figure 4 est une vue en perspective de dessous de l'adaptateur du dispositif de connexion représenté sur la figure 2 ;
- la figure 5 est une vue en perspective d'une partie terminale d'un bras d'entrainement d'un système d'essuyage selon la présente invention ;
- la figure 6 est une représentation schématique d'une coupe longitudinale, ici verticale, réalisée au niveau d'une connexion entre l'adaptateur et la partie terminale du bras d'entrainement du système d'essuyage selon la présente invention.

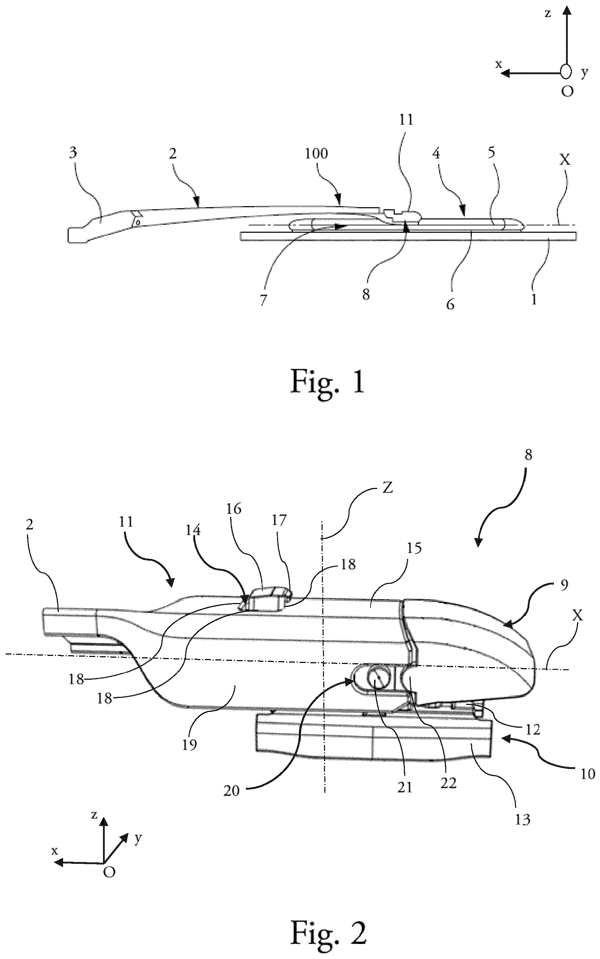

Dans la suite de la description, les dénominations longitudinales ou transversales se réfèrent à l'orientation d'un adaptateur d'un système d'essuyage. La direction longitudinale correspond à une direction d'extension longitudinale de l'adaptateur, cette direction longitudinale étant parallèle à un axe Ox d'un repère orthonormé par exemple représenté à la figure 1. Une direction transversale correspond à une direction parallèle à un axe Oy de ce repère orthonormé, l'axe Oy étant perpendiculaire à l'axe Ox. Une direction verticale correspond à une direction parallèle à un axe Oz du repère orthonormé, l'axe Oz étant perpendiculaire à l'axe Ox et à l'axe Oy.

Les coupes transversales mentionnées ci-après sont réalisées selon des plans de coupe dans lesquels s'inscrivent les axes Oy et Oz du repère orthonormé, et les coupes longitudinales sont quant à elles réalisées selon un plan de coupe dans lequel s'inscrivent les axes Ox et Oz de ce repère orthonormé.

En référence à la figure 1, un véhicule automobile est couramment équipé d'un système d'essuyage 100 pour évacuer une eau et/ou des salissures présentes sur une surface vitrée 1, notamment une lunette arrière ou un pare-brise de véhicule automobile. Le système d'essuyage 100 comprend un bras d'entraînement 2 apte à effectuer un mouvement de va-et-vient angulaire le long et au-dessus de la surface vitrée 1. Le bas d'entraînement 2 peut comprendre un entraîneur 3 chargé d'assurer une liaison mécanique entre le bras d'entraînement 2 et un arbre d'entrainement (non représenté) en rotation du bras d'entraînement 2.

Le système d'essuyage 100 comprend aussi un balai d'essuyage 4 qui s'étend selon un axe longitudinal, parallèle à l'axe Ox, dit axe longitudinal X. Le balai d'essuyage 4 comprend au moins un déflecteur d'air 5 et une lame racleuse 6 reliés l'un à l'autre par un élément de structure 7 du balai d'essuyage 4, ce dernier étant alors dépourvu de palonniers. Un tel élément de structure 7 peut par exemple être formé par un unique organe de flexion, ou par une pluralité d'organes de flexion ou encore par un support dans lequel sont enfilés un ou plusieurs organes de flexion.

Le déflecteur d'air 5 est prévu pour transformer une pression appliquée par un flux d'air circulant le long de la surface vitrée 1 en une force d'appui du balai d'essuyage 4 contre la surface vitrée 1 du véhicule automobile. La lame racleuse 6 est la pièce du balai d'essuyage 4 en contact direct avec la surface vitrée 1 et elle est configurée pour évacuer l'eau et/ou les salissures présentes sur cette dernière. Le déflecteur d'air 5, la lame racleuse 6 et l'élément de structure 7 forment un ensemble semi-rigide porté par un dispositif de connexion 8, interposé entre le bras d'entraînement 2 et le balai d'essuyage 4.

Classiquement, ce dispositif de connexion 8 comprend un adaptateur et un connecteur, le connecteur étant connecté d'une part au balai d'essuyage 4 et d'autre part à l'adaptateur, et l'adaptateur étant connecté à la fois au connecteur et à une partie terminale 11 du bras d'entrainement 2.

Le dispositif de connexion 8 assure ainsi une liaison mécanique entre la partie terminale 11 du bras d'entraînement 2 et le balai d'essuyage 4. Ce dispositif de connexion 8 permet également de séparer le balai d'essuyage 4 du bras d'entraînement 2, en vue d'un remplacement du balai d'essuyage 4.

La figure 2 illustre le dispositif de connexion 8 de la présente invention comprenant l'adaptateur 9 et le connecteur 10, où l'adaptateur 9 est la pièce qui se loge dans la partie terminale 11 du bras d'entraînement 2, cette partie terminale 11 étant également représentée sur cette figure 2. Tel qu'illustré, le dispositif de connexion 8 s'étend selon l'axe longitudinal X.

Le connecteur 10 comprend une partie supérieure, appelée support de pivot 12 et une partie inférieure, appelée embase 13. Les dénominations « inférieure » et « supérieure » doivent s'entendre en référence à la partie terminale 11 du bras d'entrainement, en ce sens que cette partie terminale 11 vient recouvrir une partie supérieure du dispositif de connexion 8. Ainsi, le support de pivot 12 et l'embase 13 sont alignés, le long d'une direction verticale Z, cette direction verticale Z étant parallèle à l'axe Oz du repère orthonormé tel que représenté sur la figure 2 et donc perpendiculaire à l'axe longitudinal X du dispositif de connexion 8.

On comprend que le support de pivot 12 est chargé d'assurer une rotation par rapport à l'adaptateur 9 et s'étend dans un espace dégagé en forme de « U » dans l'adaptateur 9, tel que cela sera décrit ci-après.

Selon un exemple de réalisation, l'embase 13 prend la forme de deux crochets qui enserrent un élément de structure du balai d'essuyage, cet élément de structure pouvant par exemple être un organe de flexion tel que précédemment décrit.

Tel qu'illustré, un orifice 14 est ménagé dans une paroi supérieure 15 de la partie terminale 11 du bras d'entrainement 2, cet orifice 14 étant configuré pour recevoir un bouton 16 issu de l'adaptateur 9 et qui présente un organe de retenue 17. Tel qu'illustré, cet organe de retenue 17 s'étend selon une direction parallèle à la paroi supérieure 15 et est destiné à venir en appui contre l'un des bords 18 délimitant l'orifice 14.

On comprend que le bouton 16 permet un premier blocage d'une translation de l'adaptateur 9 selon l'axe longitudinal X et que l'organe de retenue 17 permet un deuxième blocage de l'adaptateur 9 selon la direction verticale Z. Tel que cela est visible sur la figure 2, les bords 18 de l'orifice 14 servent de butée à ce bouton 16 et à cet organe de retenue 17.

Malgré ces blocages, il est important que le dispositif de connexion 8 conserve un certain degré de liberté en rotation par rapport à la partie terminale 11 du bras d'entrainement, notamment afin de permettre le changement du balai d'essuyage lorsque celui-ci est usé.

Lors du changement de ce balai d'essuyage, il existe un risque pour l'utilisateur de mal gérer la rotation du balai d'essuyage et d'effectuer une rotation trop importante pouvant alors endommager le dispositif de connexion, et plus particulièrement l'adaptateur de ce dispositif de connexion. L'invention propose ainsi un adaptateur comprenant un dispositif de limitation de cette rotation afin d'éviter à l'utilisateur d'endommager son système d'essuyage lors de ce changement. L'adaptateur selon la présente invention est ainsi adapté à la fois à un marché initial et à un marché d'après-vente.

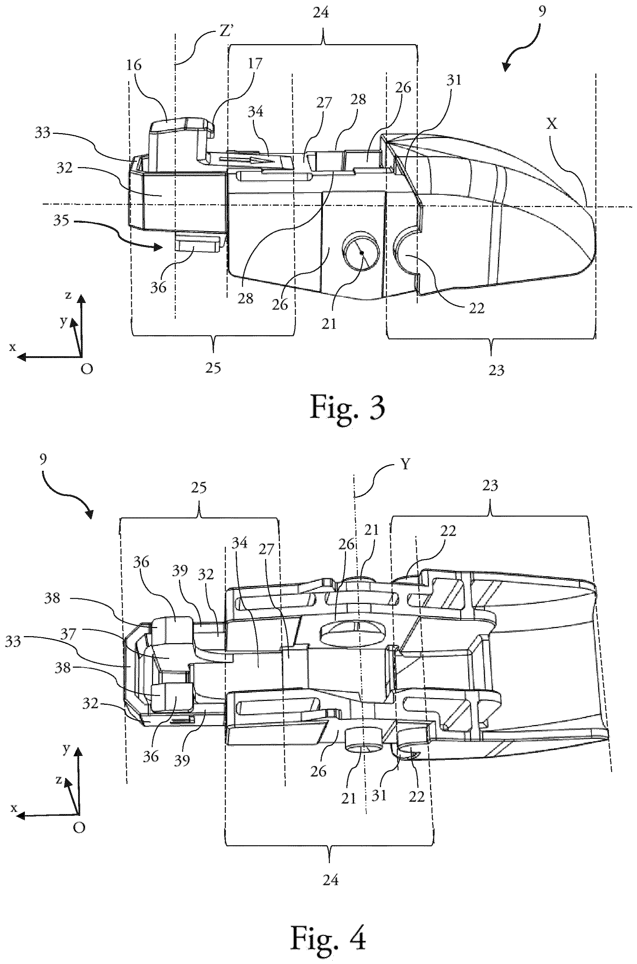

Ce dispositif de limitation de la rotation sera plus amplement décrit dans la suite de la description, notamment en référence aux figures 3 et 4.

La partie terminale 11 du bras d'entrainement 2 comprend également deux parois latérales 19. Une seule de ces parois latérales 19 est visible sur la figure 2 mais on comprend que l'autre lui fait face, ces deux parois latérales 19 pouvant être symétriques par rapport à l'axe longitudinal X.

Une ouïe 20 est ménagée dans au moins l'une de ces parois latérales 19, cette ouïe 20 présentant une forme de « U » configurée pour recevoir un maneton 21 et une oreille 22 issus de l'adaptateur 9. Ce maneton 21 et cette oreille 22 seront plus amplement décrits dans la suite de la description.

On comprend que ce maneton 21 et cette oreille 22 sont configurés pour coopérer avec l'ouïe 20 ménagée dans la partie terminale 11 du bras d'entrainement et permettent ainsi de guider et de centrer l'adaptateur 9 lors de son assemblage dans la partie terminale 11.

Les figures 3 et 4 sont des vues en perspective de l'adaptateur 9 selon un exemple de réalisation de la présente invention, cet adaptateur 9 étant vu de côté sur la figure 3 et de dessous sur la figure 4.

L'adaptateur 9 selon la présente invention s'étend principalement selon l'axe longitudinal X et comprend, dans l'ordre le long de l'axe longitudinal X, une tête 23, un corps 24 et une partie arrière 25.

Selon un aspect de la présente invention, l'axe longitudinal X peut former un axe de symétrie de l'adaptateur 9. Tel qu'illustré, la tête 23 forme une première extrémité longitudinale de l'adaptateur 9 et la partie arrière 25 forme une deuxième extrémité longitudinale de cet adaptateur 9, cette première extrémité et cette deuxième extrémité étant opposées par rapport au corps 24 de l'adaptateur 9.

Le corps 24 de l'adaptateur 9 est délimité au moins par deux flancs 26 reliés entre eux au moins par un pont de matière 27, de manière à prendre une forme en « U », vue de dessus. On comprend alors que la base de ce U est réalisée par le pont de matière 27 et les flancs de U sont réalisés par des bords supérieurs 28 des flancs 26 du corps 24.

Ce corps 24 présente également une section transversale en forme de « U », cette section transversale s'inscrivant dans un plan parallèle au plan Oyz. Cette forme de « U » permet de dégager un espace configuré pour recevoir le support de pivot 12 du connecteur, tel que précédemment mentionné.

Le pont de matière 27 s'étend selon un plan d'extension principal qui définit une face supérieure du corps 24.

Tel que précédemment mentionné, l'adaptateur 9 comprend au moins un maneton 21 configuré pour être reçu dans l'ouïe ménage dans la paroi latérale de la partie terminale du bras d'entrainement. Tel que cela est visible sur les figures 3 et 4, le maneton 21 est réalisé sur au moins l'un des flancs 26 du corps, et plus particulièrement sur une face externe de ce flanc 26, autrement dit sur une face destinée à coopérer avec la partie terminale du bras d'entrainement décrite ci-dessus. On comprend ainsi que ces flancs 26 comprennent également chacun une face interne, opposée à la face externe du flanc 26 correspondant, et destinée à coopérer avec le connecteur du dispositif de connexion, et plus particulièrement avec le support de pivot de ce connecteur.

Tel qu'on peut le voir sur la figure 4, l'adaptateur selon la présente invention comprend deux manetons 21 respectivement ménagés sur chacun des flancs 26 du corps 24 de l'adaptateur 9.

Ces manetons 21 présentent chacun une forme cylindrique et s'étendent selon une direction transversale Y, parallèle à l'axe Oy du repère orthonormé tel que représenté sur la figure 4. Ces manetons 21 s'étendent ainsi selon une direction perpendiculaire à l'axe longitudinal X de l'adaptateur 9 et en éloignement du corps 24.

On comprend que ces manetons 21 sont configurés pour faciliter l'assemblage de l'adaptateur 9 avec la partie terminale du bras d'entrainement.

Comme mentionné, l'adaptateur 9 comporte également une tête 23 qui s'étend longitudinalement dans le prolongement du corps 24, selon l'axe longitudinal X précédemment défini. Tel que cela est visible sur les figures 3 et 4, la tête 23 est plus haute et/ou plus large que le corps 24 de l'adaptateur 9. Il est ainsi formé un épaulement 31 qui recouvre partiellement les faces externes des flancs 26 du corps 24. Cet épaulement 31 sert de butée à la partie terminale du bras d'entrainement, au moins à un bord d'extrémité longitudinale des parois latérales de cette partie terminale venant s'y appuyer lorsque l'adaptateur 9 est monté dans cette partie terminale.

Selon un exemple de réalisation, la tête 23 présente une section transversale, c'est-à-dire une section de la tête 23 s'inscrivant dans un plan parallèle au plan Oyz du repère orthonormé, en forme de « U » qui, comme pour le corps 24, permet de dégager un espace dans lequel le connecteur participant au dispositif de connexion peut s'étendre et débattre en rotation.

L'adaptateur 9 comprend encore au moins une oreille 22 destinée à être reçu dans l'ouïe ménagée dans la partie terminale du bras d'entrainement. Cette oreille 22 s'étend longitudinalement, c'est-à-dire selon l'axe longitudinal X, à partir de la tête 23 et en empiétant au moins partiellement sur la face externe de l'un des flancs 26 du corps 24. L'oreille 22 prend naissance sur l'épaulement 31 et présente une forme courbée dont le sommet de la courbure est orienté vers le corps 24 de l'adaptateur 9. Tel que précédemment mentionnée, cette oreille 22 assure une fonction de calage et de centrage de l'adaptateur 9 dans la partie terminale du bras d'entrainement. Une telle oreille 22 peut par exemple être formée par un unique demi-disque issu de la tête 23 de l'adaptateur 9, tel que cela est visible sur les figures 3 et 4.

Selon une caractéristique de la présente invention une oreille 22 peut empiéter sur l'un des flancs 26 du corps 24, ou deux oreilles 22 peuvent respectivement empiéter sur chacun des flancs 26 de ce corps 24.

Enfin, l'adaptateur 9 comprend une partie arrière 25 qui s'étend également selon l'axe longitudinal X, en éloignement du corps 24. Selon un exemple de réalisation de la présente invention illustré sur les figures 3 et 4, cette partie arrière 25 comprend deux pans latéraux 32 reliés entre eux par une paroi de fond 33, cette partie arrière 25 présentant ainsi une forme de « U », vue de dessous, tel que par exemple représenté sur la figure 4. Chacun des pans latéraux 32 de cette partie arrière 25 émerge de l'un des flancs 26 du corps 24, ces pans latéraux 32 et ces flancs 26 se chevauchant partiellement.

La partie arrière 25 de l'adaptateur entoure au moins partiellement une languette flexible 34 issue de matière avec le pont de matière 27 du corps 24 et s'étendant également selon l'axe longitudinal X. Autrement dit, cette languette flexible 34 est entourée d'une part par la forme de « U » de la partie arrière 25, et d'autre part par le pont de matière 27 du corps 24, ce pont de matière 27 venant ainsi fermer la forme de « U » de la partie arrière 25.

La languette flexible 34 présente le bouton 16 configuré pour être logé dans l'orifice ménagé dans la paroi supérieure de la partie terminale du bras d'entrainement tel que précédemment décrit. Ce bouton 16 s'étend principalement selon un axe vertical Z', parallèle à l'axe Oz du repère orthonormé, et présente l'organe de retenue 17 qui s'étend principalement selon une direction parallèle à l'axe longitudinal X, depuis le bouton 16 et vers le corps 24 de l'adaptateur 9.

Un dispositif 35 de limitation d'une rotation de la languette flexible 34 par rapport à la partie arrière 25 est également issu, au moins en partie, du bouton 16.

Ce dispositif 35 de limitation de la rotation de la languette flexible 34 est configuré pour éviter une rotation trop importante - également appelée « over-rotation » - de cette languette flexible 34, par exemple lors d'un changement de balai d'essuyage, par rapport à la partie arrière 25 de l'adaptateur 9. En effet, en cas d'over-rotation, la languette flexible 34 pourrait se casser, ce qui rendrait alors l'adaptateur 9 inutilisable.

Selon un premier exemple de réalisation de la présente invention illustré sur les figures 3 et 4, le dispositif 35 de limitation de la rotation de la languette flexible 34 comprend deux pattes 36 qui s'étendent principalement selon des directions parallèles à l'axe vertical Z' selon lequel s'étend le bouton 16, ces pattes 36 et ce bouton 16 s'étendant dans deux sens opposés.

Comme cela est notamment visible sur la figure 4, ces pattes 36 sont issue à la fois du bouton 16 et de la languette flexible 34 portant ce bouton 16.

Ces pattes 36 comprennent, chacune, une grande branche 37 et une petite branche 38, prenant ainsi une forme de « L ». Tel que l'on peut notamment le voir sur la figure 4, ces pattes 36 émergent du bouton 16 et de la languette flexible 34 par leur grande branche 37, leur petite branche 38 s'étendant quant à elle vers l'extérieur de la partie arrière 25, selon la direction transversale Y. En d'autres termes, ces petites branches 38 s'étendent transversalement en éloignement de l'adaptateur 9.

On comprend donc que selon l'exemple de réalisation illustré sur les figures 3 et 4, les petites branches 38 de ces pattes 36 sont configurées pour venir en appui respectivement contre chacun des pans latéraux 32 de la partie arrière 25. Plus précisément, les petites branches 38 de ces pattes 36 viennent en appui contre des bords inférieurs 39 de ces pans latéraux 32.

Afin de permettre la rotation de l'adaptateur 9 par rapport à la partie terminale du bras d'entrainement dans laquelle il est assemblé, la languette flexible 34 est mobile par rapport à la partie arrière 25 de l'adaptateur 9. Lorsque, dû par exemple à une rotation du balai d'essuyage, la languette flexible 34 bouge, on comprend que son mouvement est limité par les pattes 36. En effet, les petites branches 38 de ces pattes 36 viennent en appui contre les bords inférieurs 39 des pans latéraux 32 de cette partie arrière 25 qui servent alors de butée à ces pattes 36. La rotation de cette languette flexible 34 par rapport à la partie arrière 25 de l'adaptateur 9 est ainsi limitée, empêchant la rupture de cette languette flexible 34.

On comprend en effet qu'en cas de rupture de cette languette flexible 34, le premier blocage et le deuxième blocage de l'adaptateur par rapport à la partie terminale du bras d'entrainement décrit ci-dessus ne sont plus assurés, l'adaptateur 9 étant dès lors inutilisable.

Selon un deuxième exemple de réalisation de la présente invention non représenté, le dispositif de limitation de la rotation de la languette flexible comprend une seule patte configurée pour prendre appui sur la paroi de fond de la partie arrière de l'adaptateur ou sur l'un des deux pans latéraux de cette partie arrière.

Selon une variante de réalisation applicable au premier exemple de réalisation ou au deuxième exemple de réalisation, la partie arrière de l'adaptateur comprend un unique pan latéral émergeant de l'un des flancs du corps de cet adaptateur, la/les patte(s) prenant alors appui contre cet unique pan latéral.

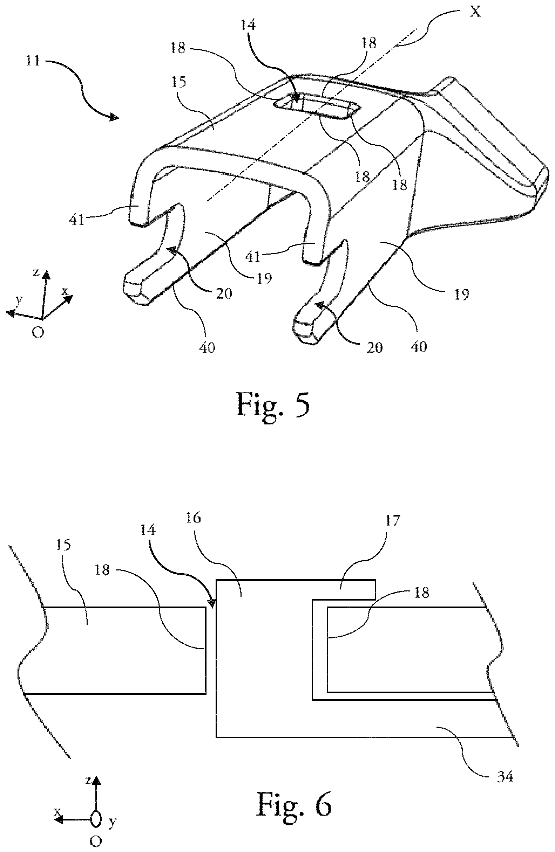

La figure 5 est une vue en perspective de la partie terminale 11 du bras d'entrainement, cette partie terminale 11 s'étendant principalement selon l'axe longitudinal X. Tel que décrit en référence à la figure 2, cette partie terminale 11 comprend la paroi supérieure 15 dont sont issus les deux parois latérales 19. Selon une coupe transversale, la partie terminale 11 présente ainsi un profil en forme de « U », chacune des parois latérales 19 se terminant par une arête terminale 40.

Tel qu'illustré sur cette figure 5, chacune de ces arêtes terminales 40 s'inscrit dans un plan parallèle à la paroi supérieure 15.

On comprend que la forme de « U » de cette partie terminale 11 dégage un espace configuré pour recevoir l'adaptateur, tel qu'illustré sur la figure 2.

Tel que précédemment décrit, les parois latérales 19 présentent chacune un bord d'extrémité longitudinale 41 destiné à venir en appui contre l'épaulement formé par le recouvrement du corps de l'adaptateur par la tête de cet adaptateur. Afin de permettre une rotation de l'adaptateur dans un sens antihoraire autour de l'axe Oy du repère orthonormé, un jeu est prévu entre cet épaulement et chacun des bords d'extrémité longitudinale 41 de la partie terminale 11 du bras d'entrainement.

Les parois latérales 19 de la partie terminale 11 sont également pourvues d'ouïes 20, chacune de ces ouïes 20 étant ménagés longitudinalement depuis l'un des bords d'extrémité longitudinale 41 de cette partie terminale 11. Tel que précédemment décrit, chacune de ces ouïes 20 présente une forme de U et est configurée pour recevoir à la fois l'oreille issue de la tête de l'adaptateur et le maneton réalisé sur au moins l'une des faces externes des flancs du corps de cet adaptateur.

La rotation de l'adaptateur autour de l'axe Oy est également permise par l'espace en forme de « U » de cette partie terminale 11 ainsi que par un jeu prévu entre chaque maneton ménagé sur l'adaptateur et l'ouïe 20 ménagée dans la partie terminale 11 du bras d'entrainement avec laquelle il coopère.

Cette rotation de l'adaptateur permet de changer le balai d'essuyage lorsque celui-ci est usé mais engendre un risque dit « d'over-rotation », c'est-à-dire un risque d'une rotation trop importante de l'adaptateur par rapport au bras d'entrainement - et plus particulièrement par rapport à la partie terminale 11 de ce bras d'entrainement - qui peut endommager cet adaptateur et le rendre alors inutilisable.

Tel que précédemment mentionné, la présente invention permet de limiter ce risque grâce au dispositif de limitation de la rotation de la languette flexible par rapport à la partie arrière de l'adaptateur.

La paroi supérieure 15 de cette partie terminale 11 comprend quant à elle l'orifice 14 configuré pour recevoir le bouton issu de la languette flexible de l'adaptateur. Cet orifice 14, présente une forme rectangulaire et est ainsi délimité par quatre bords 18. Tel que précédemment mentionné, au moins l'un de ces bords 18 sert de butée à l'organe de retenue issu du bouton.

La figure 6 est une vue schématique d'une coupe longitudinale, c'est-à-dire une coupe réalisée selon un plan parallèle au plan Oxz, réalisée au niveau de l'orifice 14 ménagé dans la paroi supérieure 15 de la partie terminale 11 du bras d'entrainement. Tel qu'illustré, la languette flexible 34, le bouton 16 et l'organe de retenue 17 délimite une zone de réception configurée pour recevoir au moins l'un des bords 18 délimitant l'orifice 14. On comprend de cette figure 6 que les bords 18 de l'orifice 14 servent de butée à la fois au bouton 16 et à l'organe de retenue 17 de ce bouton 16, assurant ainsi le premier blocage et le deuxième blocage précédemment décrits.

On comprend à la lecture de ce qui précède que l'invention permet à un utilisateur de changer un balai d'essuyage du système d'essuyage de son véhicule, sans risquer d'endommager ce système d'essuyage par une rotation trop importante. Cet objectif est atteint grâce à un adaptateur comprenant un dispositif de limitation de la rotation de la languette flexible par rapport à la partie arrière de cet adaptateur.

L'invention ne saurait toutefois se limiter aux moyens et configurations décrits et illustrés En particulier, la forme, et la disposition du dispositif limitant la rotation de la languette flexible par rapport à la partie arrière de l'adaptateur peuvent être modifiées sans nuire à l'invention, dans la mesure où il remplit les mêmes fonctionnalités que celles décrites dans ce document.

## Revendications

1. Adaptateur (9) destiné à relier un balai d'essuyage (4) à un bras d'entraînement (2) d'un système d'essuyage (100) pour véhicule automobile, l'adaptateur (9) s'étendant principalement selon un axe longitudinal (X) et comprenant au moins :
- un corps (24) comprenant deux flancs (26) reliés entre eux, au moins en partie, par un pont de matière (27),
- une tête (23) formant une première extrémité longitudinale de l'adaptateur (9),
- une partie arrière (25) formant une deuxième extrémité longitudinale de l'adaptateur (9) opposée à la première extrémité longitudinale par rapport au corps (24),
- une languette flexible (34) issue du corps (24) de l'adaptateur (9) et un bouton (16) émergeant de la languette flexible (34), ce bouton (16) étant configuré pour bloquer l'adaptateur (9) dans une partie terminale (11) du bras d'entrainement (2) du système d'essuyage (100),
le bouton (16) présentant au moins un organe de retenue (17) configuré pour limiter un mouvement de l'adaptateur (9) le long d'une direction perpendiculaire à un plan dans lequel s'inscrit le pont de matière (27), et l'adaptateur (9) comprenant un dispositif (35) de limitation d'une rotation de la languette flexible (34) par rapport à la partie arrière (25) de l'adaptateur,
le dispositif (35) de limitation de la rotation de la languette flexible (34) par rapport à la partie arrière (25) de l'adaptateur (9) comprenant au moins une patte (36) qui prend appui sur la partie arrière (25) de l'adaptateur (9), la patte (36) présentant une forme de L, cette patte (36) comprenant une petite branche (38) et une grande branche (37) **caractérisé en ce que** la partie arrière (25) présente au moins un pan latéral (32) issu d'un flanc (26) du corps (24) de l'adaptateur (9), la patte (36) émergeant du bouton de l'adaptateur (9) par sa grande branche (37) et dans lequel la petite branche (38) de cette patte (36) prend appui sur un bord inférieur (39) du pan latéral (32) de la partie arrière (25).

2. Adaptateur (9) selon la revendication précédente, dans lequel la patte (36) est issue de matière au moins avec le bouton (16).

3. Adaptateur (9) selon l'une quelconque des revendications précédentes, dans lequel la partie arrière (25) comprend deux pans latéraux (32) respectivement issus de chacun des flancs (26) du corps (24) de l'adaptateur et une paroi de fond (33) reliant ces deux pans latéraux (32).

4. Adaptateur (9) selon la revendication 3, dans lequel la patte (36) émerge du bouton (16) de l'adaptateur (9) par sa grande branche (37) et dans lequel la petite branche (38) de cette patte (36) prend appui sur un bord inférieur de la paroi de fond (33) de la partie arrière (25).

5. Adaptateur (9) selon l'une quelconque des revendications précédentes, dans lequel la tête (23) de l'adaptateur (9) présente au moins une oreille (22) issue d'un épaulement (31) joignant la tête (23) et le corps (24), cette oreille (22) étant configurée pour être reçue dans une ouïe (20) ménagée dans la partie terminale (11) du bras d'entrainement (2).

6. Adaptateur (9) selon l'une quelconque des revendications précédentes, dans lequel au moins une face externe de l'un des flancs (26) du corps (24) comprend au moins un maneton (21) configuré pour être reçu dans une ouïe (20) ménagée dans la partie terminale (11) du bras d'entrainement (2).

7. Balai d'essuyage (4) comprenant au moins un adaptateur (9) selon l'une quelconque des revendications précédentes.

8. Système d'essuyage (100) comprenant un balai d'essuyage (4) selon la revendication précédente et un bras d'entrainement (2) dont une partie terminale (11) présente deux parois latérales (19) et une paroi supérieure (15), une ouïe (20) étant ménagée dans
chacune des parois latérales (19), chacune des ouïes (20) étant configurée pour coopérer avec une oreille (22) et/ou un maneton (21) de l'adaptateur (9) et la paroi supérieure (15) de la partie terminale (11) étant pourvue d'un orifice (14) destiné à recevoir le bouton (16) de l'adaptateur (9), un bord (18) délimitant l'orifice (14) étant 10 interposé entre l'organe de retenue (17) et la languette flexible (34).

## Patentansprüche

1. Adapter (9), der dazu bestimmt ist, ein Wischblatt (4) mit einem Antriebsarm (2) eines Wischsystems (100) für ein Kraftfahrzeug zu verbinden, wobei sich der Adapter (9) im Wesentlichen entlang einer Längsachse (X) erstreckt und zumindest Folgendes umfasst:
- einen Körper (24), der zwei Flanken (26) umfasst, die zumindest teilweise durch eine Materialbrücke (27) miteinander verbunden sind,
- einen Kopf (23), der ein erstes Längsende des Adapters (9) ausbildet,
- einen hinteren Abschnitt (25), der ein zweites Längsende des Adapters (9) ausbildet, das, bezogen auf den Körper (24), dem ersten Längsende gegenüberliegt,
- eine flexible Zunge (34), die vom Körper (24) des Adapters (9) ausgeht, und einen Knopf (16), der von der flexiblen Zunge (34) hervorragt, wobei der Knopf (16) konfiguriert ist, um den Adapter (9) in einem Endabschnitt (11) des Antriebsarms (2) des Wischsystems (100) zu fixieren,
wobei der Knopf (16) zumindest ein Halteelement (17) aufweist, das konfiguriert ist, um eine Bewegung des Adapters (9) entlang einer Richtung senkrecht zu einer Ebene, in der die Materialbrücke (27) liegt, zu begrenzen, und wobei der Adapter (9) eine Vorrichtung (35) zur Begrenzung einer Drehung der flexiblen Zunge (34) relativ zum hinteren Abschnitt (25) des Adapters umfasst,
wobei die Vorrichtung (35) zur Begrenzung der Drehung der flexiblen Zunge (34) relativ zum hinteren Abschnitt (25) des Adapters (9) zumindest eine Lasche (36) umfasst, die auf dem hinteren Abschnitt (25) des Adapters (9) aufliegt, wobei die Lasche (36) eine L-Form aufweist, wobei die Lasche (36) einen kleinen Zweig (38) und einen großen Zweig (37) umfasst,
**dadurch gekennzeichnet, dass** der hintere Abschnitt (25) zumindest eine Seitenfläche (32) aufweist, die von einer Flanke (26) des Körpers (24) des Adapters (9) ausgeht, wobei die Lasche (36) mit ihrem großen Zweig (37) vom Knopf des Adapters (9) hervorragt und wobei der kleine Zweig (38) der Lasche (36) auf einer Unterkante (39) der Seitenfläche (32) des hinteren Abschnitts (25) aufliegt.

2. Adapter (9) nach dem vorangehenden Anspruch, wobei die Lasche (36) zumindest mit dem Knopf (16) einstückig ausgebildet ist.

3. Adapter (9) nach einem der vorangehenden Ansprüche, wobei der hintere Abschnitt (25) zwei Seitenflächen (32) umfasst, die jeweils von einer der Flanken (26) des Körpers (24) des Adapters ausgehen, und eine Bodenwand (33), die die beiden Seitenflächen (32) verbindet.

4. Adapter (9) nach Anspruch 3, wobei die Lasche (36) mit ihrem großen Zweig (37) vom Knopf (16) des Adapters (9) hervorragt und wobei der kleine Zweig (38) der Lasche (36) auf einer Unterkante der Bodenwand (33) des hinteren Abschnitts (25) aufliegt.

5. Adapter (9) nach einem der vorangehenden Ansprüche, wobei der Kopf (23) des Adapters (9) zumindest eine Nase (22) aufweist, die von einer Schulter (31) ausgeht, die den Kopf (23) und den Körper (24) miteinander verbindet, wobei die Nase (22) konfiguriert ist, um in einer im Endabschnitt (11) des Antriebsarms (2) vorgesehenen Aussparung (20) aufgenommen zu werden.

6. Adapter (9) nach einem der vorangehenden Ansprüche, wobei zumindest eine Außenfläche einer der Flanken (26) des Körpers (24) zumindest einen Kurbelzapfen (21) umfasst, der konfiguriert ist, um in einer im Endabschnitt (11) des Antriebsarms (2) vorgesehenen Aussparung (20) aufgenommen zu werden.

7. Wischblatt (4), umfassend zumindest einen Adapter (9) nach einem der vorangehenden Ansprüche.

8. Wischsystem (100), umfassend ein Wischblatt (4) nach dem vorangehenden Anspruch und einen Antriebsarm (2), dessen einer Endabschnitt (11) zwei Seitenwände (19) und eine obere Wand (15) aufweist, wobei in jeder der Seitenwände (19) eine Aussparung (20) vorgesehen ist, wobei jede der Aussparungen (20) konfiguriert ist, um mit einer Nase (22) und/oder einem Kurbelzapfen (21) des Adapters (9) zusammenzuwirken, und wobei die obere Wand (15) des Endabschnitts (11) mit einer Öffnung (14) versehen ist, die dazu bestimmt ist, den Knopf (16) des Adapters (9) aufzunehmen, wobei zwischen dem Halteelement (17) und der flexiblen Zunge (34) eine die Öffnung (14) begrenzende Kante (18) angeordnet ist 10.

## Claims

1. Adapter (9) designed to connect a wiper blade (4) to a drive arm (2) of a wiping system (100) for a motor vehicle, the adapter (9) extending primarily along a longitudinal axis (X) and comprising at least:
- a body (24) having two sides (26) joined together, at least partially, by a bridge of material (27),
- a head (23) forming a first longitudinal end of the adapter (9),
- a rear portion (25) forming a second longitudinal end of the adapter (9) opposite the first longitudinal end with respect to the body (24),
- a flexible tongue (34) emerging from the body (24) of the adapter (9) and a knob (16) emerging from the flexible tongue (34), this knob (16) being configured to block the adapter (9) in a terminal portion (1) of the drive arm (2) of the wiping system (100),
the knob (16) having at least one retaining member (17) designed to limit a movement of the adapter (9) along a direction perpendicular to a plane in which the bridge of material (27) is inscribed, and the adapter (9) comprising a device (35) for limiting a rotation of the flexible tongue (34) with respect to the rear portion (25) of the adapter,
the device (35) for limiting the rotation of the flexible tongue (34) with respect to the rear portion (25) of the adapter (9) comprising at least one foot (36) which bears against the rear portion (25) of the adapter (9), the foot (36) having an L shape, this foot (36) comprising a small arm (38) and a large arm (37), **characterized in that** the rear portion (25) has at least one lateral face (32) emerging from a side (26) of the body (24) of the adapter (9), the foot (36) emerging from the knob of the adapter (9) by its large arm (37) and wherein the small arm (38) of this foot (36) bears against a lower edge (39) of the lateral face (32) of the rear portion (25).

2. Adapter (9) according to the preceding claim, wherein the foot (36) consists of the same material as at least the knob (16).

3. Adapter (9) according to any one of the preceding claims, wherein the rear portion (25) comprises two lateral faces (32) respectively emerging from each of the sides (26) of the body (24) of the adapter and one bottom wall (33) joining these two lateral faces (32).

4. Adapter (9) according to Claim 3, wherein the foot (36) emerges from the knob of the adapter (9) by its large arm (37) and wherein the small arm (38) of this foot (36) bears against a lower edge (39) of the lateral face (32) of the rear portion (25).

5. Adapter (9) according to the preceding claim, wherein the head (23) of the adapter (9) has at least one lug (22) emerging from a shoulder (31) joining the head (23) and the body (24), this lug (22) being designed to be received in a scoop (20) devised in the terminal portion (11) of the drive arm (2).

6. Adapter (9) according to any one of the preceding claims, wherein at least one external surface of one of the sides (26) of the body (24) comprises at least one pin (21) designed to be received in a scoop (20) devised in the terminal portion (11) of the drive arm (2) .

7. Wiper blade (4) comprising at least one adapter (9) according to any one of the preceding claims.

8. Wiping system (100) comprising a wiper blade (4) according to the preceding claim and a drive arm (2) whose terminal portion (11) has two lateral walls (19) and an upper wall (15), a scoop (20) being devised in each of the lateral walls (19), each of the scoops (20) being configured to cooperate with a lug (22) and/or a pin (21) of the adapter (9) and the upper wall (15) of the terminal portion (11) being provided with an opening (14) designed to receive the knob (16) of the adapter (9), one edge (18) bounding the opening (14) being interposed between the retaining member (17) and the flexible tongue (34).
